# EUROPÄISCHE PATENTANMELDUNG

(11) **EP 4 292 810 A1**
(43) Veröffentlichungstag der Anmeldung: **20.12.2023**
(21) Anmeldenummer: 23178741.7
(22) Anmeldetag: 12.06.2023
(51) Int. Cl.: B32B 15/01, C22C 38/00, C22C 38/04, C22C 38/18, C23C 4/067, F16D 65/12

(54) **OBERFLÄCHENSCHICHT FÜR EINEN GRUNDKÖRPER AUS GRAUGUSS ODER EINEM FERRITISCHEN STAHL, GRUNDKÖRPER MIT EINER SOLCHEN OBERFLÄCHENSCHICHT SOWIE VERFAHREN ZUR HERSTELLUNG EINES BREMSKÖRPERS FÜR EINE REIBUNGSBREMSE EINES KRAFTFAHRZEUGS**

(30) Priorität: 13.06.2022 DE 102022205963
(71) Anmelder: Volkswagen Aktiengesellschaft, 38440 Wolfsburg (DE)
(72) Erfinder: Mohwinkel, Daniel, 38108 Braunschweig (DE)

(57) **Zusammenfassung**

Eine Oberflächenschicht (8) (8) für einen Grundkörper (2, 102) aus Grauguss oder einem ferritischen Stahl, welche durch ein thermisches Auftragsverfahren auf den Grundkörper (2, 102) aufgebracht oder aufbringbar ist, weist eine Matrix aus einem hochlegierten austenitischen Stahl und in diese Matrix eingebettete Hartstoffpartikel (9, 109) (9) auf. Der hochlegierte austenitische Stahl der Matrix besteht aus mindestens 8 Gew.-% Mangan, mindestens 13 Gew.-% Chrom, maximal 5 Gew.-% weitere Begleitelemente außer Eisen, wobei ein Anteil von Nickel auf maximal 1,5 Gew.-% beschränkt ist, und Rest Eisen. Weiterhin angegeben sind ein Grundkörper (2, 102) (2) aus Grauguss oder einem ferritischen Stahl, Grundkörper (2, 102) mit einer solchen Oberflächenschicht (8) (8) sowie Verfahren zur Herstellung eines Bremskörpers für eine Reibungsbremse eines Kraftfahrzeugs.

## Beschreibung

Die Erfindung bezieht sich auf das Gebiet der Kraftfahrzeugtechnik. Insbesondere bezieht sich die Erfindung auf eine Oberflächenschicht für einen Grundkörper aus Grauguss oder einem ferritischen Stahl, welche durch ein thermisches Auftragsverfahren auf den Grundkörper aufbringbar ist, wobei die Oberflächenschicht eine Matrix aus einem hochlegierten austenitischen Stahl und in diese Matrix eingebettete Hartstoffpartikel aufweist.

Weiterhin bezieht sich die Erfindung auf einen Grundkörper aus Grauguss oder einem ferritischen Stahl mit einer solchen Oberflächenschicht. Der Grundkörper ist vorzugsweise ein Bremskörper, beispielsweise eine Bremsscheibe oder eine Bremstrommel, einer Reibungsbremse eines Kraftfahrzeugs.

Überdies bezieht sich die Erfindung auf ein Verfahren zur Herstellung eines Bremskörpers für eine Reibungsbremse eines Kraftfahrzeugs.

Bremskörper für Reibungsbremsen von Kraftfahrzeugen werden üblicherweise aus Grauguss hergestellt. Grauguss zeichnet sich durch eine hohe volumetrische Wärmekapazität und eine gute Thermoschockbeständigkeit aus. Zudem ist Grauguss als Werkstoff kostengünstig und die Fertigung von Bremsscheiben aus Grauguss ist technisch gut beherrschbar. Problematisch sind jedoch die hohe Korrosionsneigung und der hohe Verschleiß des Werkstoffs im Betrieb des Kraftfahrzeugs. Durch Korrosion kommt es zu optischen Mängeln, da sich bereits nach kurzer Zeit Rotrost ausbilden kann, welcher durch häufig eingesetzte offene Felgen direkt einsehbar und daher auch unter ästhetischen Gesichtspunkten nicht wünschenswert ist. Die starke Korrosionsneigung des Werkstoffs kann bei sparsamer Fahrweise oder bei Elektro- und Hybridfahrzeugen mit großen Rekuperationsanteilen aufgrund der seltenen Bremsbetätigung zu einer verstärkten Oberflächenbeeinträchtigung führen, welche zu einem frühzeitigen Austausch der Bremsscheibe nötigt.

Weiterhin sind Bremsscheiben aus keramischen Werkstoffen bekannt. Diese weisen zwar eine hohe Lebensdauer und exzellente Standfestigkeit auf, vermochten sich aufgrund ihres sehr hohen Preises für den Großserieneinsatz jedoch bisher nicht durchzusetzen.

Als Alternative hierzu wurde vorgeschlagen, einen Grauguss-Grundkörper im Bereich der Reibflächen mit einer Oberflächenschicht zu versehen, die als Verschleißschutzschicht dient.

DE 10 2018 112 035 B3 offenbart beispielsweise eine Verschleißschutzschicht in Form einer Hartbeschichtung aus Wolframkarbid. Eine solche Lösung erzielt im Vergleich zu reinen Grauguss-Bremsscheiben ebenfalls eine deutlich höhere Lebensdauer und Standfestigkeit, ist jedoch deutlich kostengünstiger als Bremsscheiben, die insgesamt aus keramischen Werkstoffen bestehen.

Reine Korrosionsschutzschichten wie temporäre Lack-, Zink- oder Pulverbeschichtungen sind als Verschleißschutzschicht hingegen ungeeignet, da diese auf der Reibfläche bereits bei den ersten Bremsvorgängen abgerieben werden und dort keinen dauerhaften Korrosionsschutz zu entfalten vermögen. Solche Korrosionsschutzschichten eignen sich lediglich zum Schutz nicht reibungsbeanspruchter Abschnitte einer Bremsscheibe sowie gegebenenfalls zur temporären Konservierung einer attraktiven Oberflächenanmutung der Reibfläche bei der Auslieferung von Neufahrzeugen.

Zur Verbesserung der Haftung der Oberflächenschicht bzw. Verschleißschutzschicht ist weiterhin bekannt, zwischen dieser und dem Grundkörper aus Grauguss eine Haftvermittlungsschicht anzuordnen. Eine Bremsscheibe mit einer Oberflächenschicht als Verschleißschutzschicht und einer Haftvermittlungsschicht sowie ein Herstellungsverfahren hierfür sind aus WO 2020/234144 A1 bekannt.

Eine gattungsgemäße Oberflächenschicht für einen Grundkörper aus Grauguss der eingangs genannten Art ist im Rahmen einer Bremsscheibe für eine Reibungsbremse eines Kraftfahrzeugs aus DE 10 2019 208 411 A1 bekannt. Die Oberflächenschicht wird mittels Auftragsschweißen, bevorzugt Laserauftragsschweißen, auf eine Haftvermittlungsschicht aufgetragen und ist aus einem korrosionsbeständigen Chromstahl als Matrixphase gefertigt, in dem Hartstoffpartikel, insbesondere Keramikpartikel, nämlich Titankarbid-, Niobkarbid-, Borkarbid oder Vanadiumkarbidpartikel eingelagert sind. Laut DE 10 2019 208 411 A1 habe Chromstahl gegenüber Chrom-Nickel-Stahl den Vorteil einer höheren Beständigkeit gegen Spannungs- und Schwingungskorrosion. Diese Korrosionsarten könnten bei Überlagerung von mechanischen Spannungen und korrosivem Angriff durch insbesondere Chloridionen auftreten. Es wird vorgeschlagen, dass der Chromstahl der Verschleißschutzschicht neben Eisen als Basiswerkstoff mindestens 10 Gew.-% Chrom enthält. Die Haftvermittlungsschicht besteht aus einem austenitischem oder teil-austenitischem Chrom-Nickel-Stahl. Diese ist mittels Laserauftragsschweißen auf den Basiskörper aufgebracht. Sie weist neben Eisen als Basiswerkstoff mindestens 10 Gew.-% Chrom sowie mindestens 4 Gew.-% Nickel auf und besitzt eine Schichtdicke von weniger als 150 µm.

Aus DE 10 2014 015 474 A1 ist ein Oberflächenschichtsystem für einen Grundkörper aus Grauguss im Rahmen einer Bremsscheibe für eine Reibungsbremse eines Kraftfahrzeugs bekannt. Dieses umfasst eine Haftschicht, auf der eine Korrosionsschicht, eine optionale Oxidschicht und darauf wiederum eine Oberflächenschicht als Verschleißschutz- und Reibschicht aufgebracht sind. Die Haftschicht besteht aus einem Material des Grauguss-Substrats mit einem auf 20 bis 60 Gew.-% erhöhten Anteil an Chrom oder Molybdän, wobei der überwiegende Anteil des lamellaren Kohlenstoffs des Graugusses in der Haftschicht als Cr- und/oder Mo-Carbid chemisch gebunden vorliegt. Die Korrosionsschutzschicht besteht aus nitriertem, nitridiertem oder nitrocarburiertem Haftschichtmaterial. Die Oberflächenschicht besteht aus einem Werkstoff mit einer metallischen Matrix und einer darin verteilten Keramikkomponente. Als metallische Matrix sollen bevorzugt hochlegierte Stähle oder Chrom-Nickellegierungen mit einem Chrom-Gehalt oberhalb 15 Gew.-% verwendet werden. Als besonders geeignet werden hochlegierte CrNiMo-Stähle oder NiCrMo-Legierungen genannt. Ein geeigneter CrNiMo-Stahl sei Fe28Cr16 Ni4,5Mo1,5Si1,75C, weise also eine Zusammensetzung aus 28 Gew.-% Chrom, 16 Gew.-% Nickel, 4,5 Gew.-% Molybdän, 1,5 Gew.-% Silizium, 1,75 Gew.- % Kohlenstoff, Rest Eisen, auf. Geeignete NiCrMo-Legierungen könnten eine Zusammensetzung aus 20 bis 23 Gew.-% Chrom, bis zu 5 Gew.-% Eisen, 8 bis 10 Gew.-% Molybdän, 3,15 bis 4,15 Gew.-% Niob und Tantal in Summe, den auf 100% ergänzenden Gewichtsanteil (Rest) Nickel aufweisen. Besonders bevorzugt sei die Legierungszusammensetzung mit 21,5 Gew.-% Chrom, 2,5 Gew.-% Eisen, 9,0 Gew.-% Molybdän, 3,7 Gew.-% Niob und Tantal in Summe, Rest Nickel. Ein besonders geeigneter austenitischer nichtrostender Stahl sei EN 1.4404, entsprechend AISI 316L, welcher 16-18,5 Gew.-% Cr, 10-14 Gew.-% Ni und 2-2, 5 Gew.-% Mo aufweise.

In praktischen Versuchen hat sich die Legierung AISI 316L aufgrund ihrer hohen Duktilität als vorteilhaft erwiesen. Der Einsatz eines hohen Nickelanteils von 10 bis 13 Gew.-% wird jedoch bisweilen als bedenklich angesehen, da durch Abrieb Nickeloxide entstehen können.

Als Alternative für die Matrix wird nichtrostender Stahl EN 1.4016, entsprechend AISI 430 erwogen, welcher praktisch nickelfrei ist und als Haupteisenbegleiter Chrom mit einem Anteil von 16 bis 18 Gew.-% aufweist. Hierbei handelt es sich im Unterschied zum austenitischen AISI 316 L um einen hochlegierten ferritischen Stahl, welcher entsprechend magnetisch ist.

Eine ferritische Matrix ist jedoch im Hinblick auf die Überwachung der Schichtdicke problematisch. Insbesondere an beschichteten Bremskörpern ist es nahezu unabdingbar eine Schichtdickenmessung durchführen zu können, um innerhalb von Wartungsintervallen die Verschleißgrenze des Bremskörpers ermitteln zu können.

Ein etabliertes Verfahren zur Schichtdickenmessung an einer beschichteten Bremsscheibe beruht auf dem Prinzip der magnetinduktiven Messung, wie es auch bei Lackierungen oder Anstrichen der Fall ist. Dieses Messprinzip setzt eine nicht-magnetische Schicht voraus, welche auf einen magnetischen Grundkörper, beispielsweise aus Grauguss oder ferritischem Stahl, aufgetragen ist.

Es ist unmittelbar erkennbar, dass die etablierten Verfahren zur Schichtdickenmessung für eine ferritische AISI 430 Legierung nicht eingesetzt werden können, wohingegen dies für eine AISI 316L Legierung, welche aufgrund des Nickelgehaltes austenitisch und damit nichtmagnetisch ist, problemlos möglich ist.

Eine Möglichkeit, eine Verschleißgrenze ohne eine induktive Schichtdickenmessung erkennbar zu machen, ist beispielsweise ein Lasergravieren der Oberflächenschicht nach deren Aufbringung und Schleifen. Dabei wird in die Oberflächenschicht eine Gravur mit einer Tiefe entsprechend der Verschleißgrenze eingebracht. Hierdurch kann visuell oder haptisch der Verschleißzustand der Oberflächenschicht ermittelt werden.

Eine weitere Möglichkeit besteht darin, eine farbliche Verschleißgrenzenkennzeichnung. vorzunehmen, welche bei Erreichen der Verschleißgrenze durch Abrieb der Oberflächenschicht freigelegt wird.

All diese Alternativen sind jedoch mit einem zusätzlichen Aufwand in der Herstellung verbunden und erfordern überdies inspektionsseitig unterschiedliche Vorgehensweisen.

Vor diesem Hintergrund liegt der Erfindung die Aufgabe zu Grunde, Lösungen aufzuzeigen, welche die Verwendung einer magnetinduktiven Schichtdickenmessung weiterhin gestatten, jedoch die Problematik der Nickeloxidbildung zumindest deutlich abschwächen sowie ein entsprechendes Herstellungsverfahren anzugeben.

Diese Aufgabe wird zunächst durch eine Oberflächenschicht für einen Grundkörper aus Grauguss oder einem ferritischen Stahl mit den Merkmalen von Patentanspruch 1 gelöst, welche durch ein thermisches Auftragsverfahren auf den Grundkörper aufbringbar oder aufgebracht ist, wobei die Oberflächenschicht eine Matrix aus einem hochlegierten austenitischen Stahl und in diese Matrix eingebettete Hartstoffpartikel aufweist. Der hochlegierte austenitische Stahl der Matrix besteht hierbei aus:
- mindestens 8 Gew.-% Mangan,
- mindestens 13 Gew.-% Chrom,
- maximal 5 Gew.-% weitere Begleitelemente außer Eisen, wobei der Anteil von Nickel auf maximal 1,5 Gew.-% beschränkt ist, und
- Rest Eisen.

Die erfindungsgemäße Lösung unterscheidet sich vom Stand der Technik vor allem durch den deutlich erhöhten Anteil an Mangan als Austenitbildner. Hierdurch wird es möglich, unter Beibehaltung austenitischer, nicht-magnetischer Eigenschaften, den Anteil an Nickel deutlich zurückzudrängen, vorzugsweise auf Null zu reduzieren. Gleichwohl eignet sich die erfindungsgemäße Oberflächenschicht hervorragend als Verschleißschutzschicht für Reibpaarungen. Die Schichtdickenmessung kann mit weithin etablierten magnetinduktiven Messverfahren erfolgen.

Insbesondere kann die Oberflächenschicht an einem Bremskörper, insbesondere einer Bremsscheibe oder einer Bremstrommel, einer Reibungsbremse eines Kraftfahrzeugs als Ersatz für herkömmliche Oberflächenschichten auf der Basis von AISI 316L oder AISI 430 als Matrix zum Einsatz kommen.

Besondere Ausführungsarten der Erfindung sind Gegenstand weiterer Patentansprüche.

Im Hinblick auf die Verwendung der Oberflächenschicht als Verschleißschutzschicht ist es von Vorteil, wenn der Anteil an Mangan 8 bis 16 Gew.-% beträgt.

Ferner ist es diesbezüglich von Vorteil, wenn der Anteil an Chrom 13 bis 20 Gew.-% beträgt.

Vorzugsweise beträgt der Anteil an Nickel 0 bis 1,1 Gew.-%.

Weiterhin bevorzugt beträgt der Anteil an Kohlenstoff 0 bis 0,2 Gew.-%.

Gemäß einer weiteren besonderen Ausführungsart der Erfindung hat es sich für den Einsatz an Reibpaarungen, insbesondere für Verschleißschutzschichten an Bremskörpern, als vorteilhaft erwiesen, wenn der hochlegierte austenitische Stahl der Matrix aus folgendem besteht:
- 8 bis 11 Gew.-% Mangan,
- 17 bis 20 Gew.-% Chrom,
- 0 bis 1 Gew.-% Mo,
- 0 bis 1 Gew.-% Nickel,
- 0 bis 1 Gew.-% Silizium,
- 0 bis 0, 1 2 Gew.-% Kohlenstoff,
- 0 bis 0, 0 6 Gew.-% Phosphor,
- 0 bis 0, 0 3 Gew.-% Schwefel,
- 0, 4 bis 0, 6 5 Gew.-% Stickstoff,
- Rest Eisen.

Gemäß einer weiteren besonderen Ausführungsart der Erfindung sind die Hartstoffpartikel ausgewählt aus mindestens einem von Karbiden, Nitriden, Oxiden und Boriden.

Vorzugsweise weisen die Hartstoffpartikel eine Korngröße von 10 bis 60 µm auf.

Dabei können die Hartstoffpartikel insbesondere Partikel aus Wolframkarbid umfassen.

Gemäß einer weiteren besonderen Ausführungsart der Erfindung beträgt der Anteil der Matrix an der Oberflächenschicht 60 bis 85 Volumenprozent, vorzugsweise 60 bis 70 Volumenprozent, wobei der Rest der Oberflächenschicht durch die Hartstoffpartikel gebildet wird.

Die oben genannte Aufgabe wird weiterhin durch einen Grundkörper aus Grauguss oder ferritischem Stahl mit einer durch ein thermisches Auftragsverfahren aufgebrachten Oberflächenschicht der vorstehend erläuterten Art gelöst.

Gemäß einer besonderen Ausführungsart des Grundkörpers ist zwischen der Oberflächenschicht und dem Werkstoff des Grundkörpers als Haftvermittlungsschicht zwischen beiden eine Schicht angeordnet ist, welche zu 100 % aus einem hochlegierten austenitischen Stahl besteht, also keine Hartstoffpartikel aufweist. Der hochlegierte austenitische Stahl der Haftvermittlungsschicht kann aus den Bestandteilen der Matrix wie in Anspruch 1 angegeben bestehen. Solange diese Rahmenbedingung für die Haftvermittlungsschicht eingehalten wird, kann diese in ihren Bestandteilen von der Zusammensetzung der am Grundkörper vorgesehenen Matrix der Oberflächenschicht auch abweichen.

Gemäß einer weiteren besonderen Ausführungsart ist der Grundkörper ein Bremskörper, nämlich eine Bremsscheibe oder Bremstrommel für eine Reibungsbremse eines Kraftfahrzeugs ist, wobei die Bremsscheibe oder Bremstrommel umfasst:
einen Reibungsabschnitt mit mindestens einer Reibfläche und einen Befestigungsabschnitt zur radseitigen Befestigung am Kraftfahrzeug, wobei der Reibungsabschnitt und der Befestigungsabschnitt an dem Grundkörper aus Grauguss oder ferritischem Stahl ausgebildet sind, wobei als Reibfläche an dem Reibungsabschnitt die Oberflächenschicht als Verschleißschutzschicht thermisch aufgebracht ist, und wobei zwischen der Oberflächenschicht und dem Grundkörper die Haftvermittlungsschicht angeordnet ist, über welche die Oberflächenschicht an dem Grundkörper angebunden ist.

Vorzugsweise sind die Haftvermittlungsschicht durch Laserauftragsschweißen auf den Grundkörper aufgebracht ist und/oder die Verschleißschutzschicht durch Laserauftragsschweißen auf die Haftvermittlungsschicht aufgebracht.

Gemäß einer weiteren besonderen Ausführungsart weist die Verschleißschutzschicht eine Schichtdicke von 60 bis 420 µm auf.

Gemäß einer weiteren besonderen Ausführungsart weist die Haftvermittlungsschicht eine Schichtdicke von 60 bis 100 µm auf.

Die oben genannte Aufgabe wird weiterhin gelöst durch Verfahren zur Herstellung eines Bremskörpers für eine Reibungsbremse eines Kraftfahrzeugs gemäß Patentanspruch 15, umfassend ein Bereitstellen eines Grundkörpers aus Grauguss oder ferritischem Stahl, welcher sich über einen Reibungsabschnitt und einen Befestigungsabschnitt zur radseitigen Befestigung am Kraftfahrzeug erstreckt; ein Aufbringen einer Haftvermittlungsschicht aus einem hochlegierten austenitischen Stahl auf den Grundkörper durch ein thermisches Auftragsverfahren; ein Aufbringen einer Oberflächenschicht gemäß einem der Ansprüche 1 bis 9 als Verschleißschutzschicht auf die Haftvermittlungsschicht zur Bereitstellung einer Reibfläche an dem Reibungsabschnitt durch ein thermisches Auftragsverfahren.

Im Rahmen des thermischen Auftragsverfahrens können eine Strahlungsintensität eines Energiestrahls für das Aufbringen der Haftvermittlungsschicht sowie das Aufbringen der Oberflächenschicht in einem Bereich von 500 W/mm2 bis 1.500 W/mm² gehalten werden, wobei das jeweilige Beschichtungsmaterial für die Haftvermittlungsschicht und die Oberflächenschicht in Form eines Pulvers mit einem Pulvermassenstrom in einem Bereich von 15 g/min bis 220 g/min zugeführt werden.

Gemäß einer besonderen Ausführungsart des Verfahrens wird für das Aufbringen der Haftvermittlungsschicht sowie das Aufbringen der Oberflächenschicht der Grundkörper um eine Achse gedreht, während ein Beschichtungswerkzeug, welches den Energiestrahl und den Pulvermassenstrom zusteuert, eine Linearbewegung vollführt. Dies erfolgt derart aufeinander abgestimmt, dass sich im Lauf einer vollständigen Umdrehung des Bremskörpers eine Überlappung von einer im Lauf der Umdrehung aufgebrachten Beschichtungsspur zu einer zuvor aufgebrachten Beschichtungsspur in einem Bereich von 85% bis 95% ergibt.

Nachfolgend wird die Erfindung anhand von in der Zeichnung dargestellten Ausführungsbeispielen näher erläutert. Die Zeichnung zeigt in:
- Figur 1: eine schematische Ansicht eines Bremskörpers in Form einer Bremsscheibe im Schnitt nach einem ersten Ausführungsbeispiel der Erfindung,
- Figur 2: eine Detailansicht der Reibfläche aus Fig. 1 im Schnitt zur Veranschaulichung des Schichtaufbaus,
- Figur 3: ein Kraftfahrzeug mit Bremskörpern nach einem zweiten Ausführungsbeispiel,
- Figur 4: ein Querschnitt eines Bremskörpers nach dem zweiten Ausführungsbeispiel,
- Figur 5: eine Detaildarstellung gemäß Detail X aus Fig. 4,
- Figur 6: eine Darstellung eines Prozessschrittes im Herstellungsverfahren des Bremskörpers gemäß Fig. 4, und in
- Figur 7: die Darstellung einer Intensitätsverteilung des Energiestrahls auf dem jeweiligen Substrat.

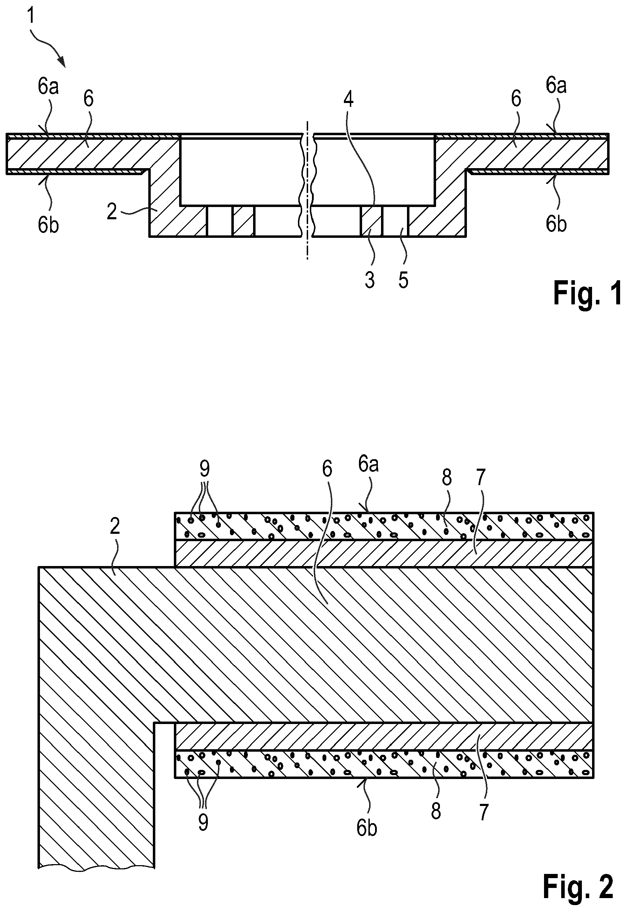

Das erste Ausführungsbeispiel in den Fig. 1 und 2 zeigt beispielhaft einen Bremskörper 1 für eine Reibungsbremse eines Kraftfahrzeugs, insbesondere eines Personenkraftfahrzeugs oder leichten Nutzfahrzeugs.

Der Bremskörper 1 ist vorliegend beispielhaft als Bremsscheibe einer Scheibenbremse dargestellt, kann jedoch beispielsweise auch als Bremstrommel ausgeführt sein.

Die Bremskörper 1 weist einen Grundkörper 2 auf, der aus Grauguss oder einem ferritischen Stahl hergestellt ist.

Dieser Grundkörper 2 erstreckt sich zunächst über einen Befestigungsabschnitt 3 des Bremskörpers 1, über welchen der Bremskörper 1 radseitig am Fahrzeug befestigbar ist.

Ohne Beschränkung hierauf kann der Befestigungsabschnitt 3 bei einer Bremsscheibe topfförmig ausgebildet sein, wie dies in Fig. 1 beispielhaft dargestellt ist. Am Boden 4 dieser Topfform sind ein oder mehrere Durchgangsöffnungen 5 ausgebildet, über welche der Bremskörper 1 beispielsweise an einer Radnabe festgelegt, insbesondere angeschraubt werden kann.

Weiterhin erstreckt sich der Grundkörper 2 in den Bereich eines Reibrings der Bremsscheibe 1, im Fall einer Trommelbremse in den Bereich einer Bremstrommel, welcher im Folgenden auch als Reibringabschnitt 6 bezeichnet wird.

Bei dem dargestellten Ausführungsbeispiel sind an dem Reibringabschnitt 6 zwei Reibflächen 6a und 6b vorgesehen, welche jeweils ringförmig ausgebildet sind und einander gegenüberliegen. Bei einer Trommelbremse erstreckt sich hingegen ein Reibringabschnitt 6 als Innenwandabschnitt um eine Achse herum.

Die Reibflächen 6a und 6b wirken an einer Scheibenbremse bei einer Betätigung derselben in an sich bekannter Weise mit an einem Bremssattel befestigten Bremsbelägen zur Erzeugung einer Bremsleistung zusammen.

Die Reibflächen 6a und 6b können vorzugsweise zur Ebene des Topfbodens 4 parallel versetzt.

Jedoch sind im Rahmen der vorliegenden Erfindung auch Bremsscheiben mit lediglich einer Reibfläche 6a möglich. Ferner kann der Grundkörper 2 gegebenenfalls zwei- oder mehrteilig ausgeführt sein, wobei Reibflächen 6a, 6b an unterschiedlichen Grundkörperteilen angeordnet sein können.

Vorliegend bestehen die Reibflächen 6a und 6b aus einem anderen Werkstoff oder Werkstoffsystem als der Grundkörper 2, insbesondere aus einem Werkstoff, welcher an der Oberfläche zu den Bremsbelägen eine höhere Härte und Verschleißfestigkeit aufweist als der Werkstoff des Grundkörpers 2.

Bei dem in Fig. 1 und 2 gezeigten Ausführungsbeispiel bestehen die Reibflächen 6a und 6b aus einem thermisch aufgebrachten Schichtsystem aus mindestens zwei Schichten aus untereinander unterschiedlichem Werkstoff. Vorliegend sind zwei Schichten dargestellt. Jedoch ist auch eine größere Zahl von Schichten möglich.

Das Schichtsystem umfasst mindestens eine Haftvermittlungsschicht 7, welche auf den Werkstoff des Grundkörpers 2 aufgebracht ist, sowie mindestens eine Oberflächenschicht 8 als Verschleißschutzschicht, welche die Oberfläche der Reibfläche 6a bzw. 6b zum Kontakt mit den Bremsbelägen bildet.

In Fig. 1 und 2 ist somit als Reibfläche 6a bzw. 6b an dem Reibungsabschnitt 6 eine Oberflächenschicht 8 thermisch aufgebracht. Die Oberflächenschicht 8 sitzt jedoch nicht unmittelbar auf dem Grundkörper 2 aus Grauguss oder ferritischem Stahl. Vielmehr ist zwischen der Oberflächenschicht 8 und dem Grundkörper 2 die Haftvermittlungsschicht 7 angeordnet. Über die Haftvermittlungsschicht 7 ist bei dem dargestellten Ausführungsbeispiel der Fig. 1 und 2 die Oberflächenschicht 8 an den Grundkörper 2 angebunden. Gegebenenfalls können zusätzliche Zwischenschichten zwischen der Haftvermittlungsschicht 7 und der Oberflächenschicht 8 vorgesehen sein.

Gegebenenfalls kann die Oberflächenschicht 8 jedoch auch direkt auf den Werkstoff des Grundkörpers 2 aufgebracht sein.

Die Haftvermittlungsschicht 7 kann beispielsweise ein hochlegierter austenitischer Stahl. Bevorzugt kommen hierfür duktile, nichtrostende Edelstähle zum Einsatz. Hierdurch wird der Grundkörper 2 vor Korrosion geschützt. Zudem dient eine solche Haftvermittlungsschicht 7 dazu, etwaige Anrisse aus der Verschleißschutzschicht 8 zu stoppen, bevor diese den Grundkörper 2 erreichen können.

Die erfindungsgemäße Oberflächenschicht 8 weist eine metallische Matrix sowie in diese eingebettete Hartstoffpartikel 9 auf.

Vorzugsweise kommen vorliegend keramische Hartstoffpartikel 9 zum Einsatz. Insbesondere sind beispielhaft Karbide, Nitride, Oxide und Boride zu nennen. Ein bevorzugter Werkstoff für die Hartstoffpartikel 9 ist Wolframkarbid.

Die Hartstoffpartikel 9 weisen vorzugsweise einen maximalen Durchmesser im Bereich von maximal 10 bis 60 µm, vorzugsweise 15 bis 55 µm auf. Mit den genannten Partikelgrößen lassen sich in Zusammenwirkung mit einem Bremsbelag eine hohe Bremsleistung und ein geringer Verschleiß an der Bremsscheibe 1 verwirklichen.

Vorzugsweise kommen Hartstoffpartikel 9 in sphärischer Form zum Einsatz.

Die metallische Matrix der Oberflächenschicht 8 besteht aus einem hochlegierten austenitischen Stahl, welche die Hartstoffpartikel 9 aufweist. Dies ermöglicht zum einen eine ausreichende Duktilität im Hinblick auf das Wärmedehnungsverhalten der Bremsscheibe 1 und zum anderen eine geringe Rissbildung verbunden mit einem hohen Verschleißwiderstand.

Da sowohl die Oberflächenschicht 8 als auch die Haftvermittlungsschicht aus einem nichtmagnetischem Werkstoff bestehen, ist der Einsatz etablierter magnetinduktiver Schichtdickenmessverfahren zur Ermittlung der Schichtdicke möglich.

Der hochlegierte austenitische Stahl der Matrix besteht hierbei aus:
- mindestens 8 Gew.-% Mangan,
- mindestens 13 Gew.-% Chrom,
- maximal 5 Gew.-% weitere Begleitelemente außer Eisen, wobei ein Anteil von Nickel auf maximal 1,5 Gew.-% beschränkt ist, und
- Rest Eisen.

Vorzugsweise beträgt der Anteil an Nickel 0 bis maximal 1,1 Gew.-%. Aufgrund des geringen Nickelgehalts bleibt die Bildung von Nickeloxiden bei einer Reibbeanspruchung gering oder kann idealerweise sogar praktisch auf Null reduziert werden.

Insbesondere im Hinblick auf die Verwendung der Oberflächenschicht 8 als Verschleißschutzschicht ist es von Vorteil, wenn der Anteil an Mangan 8 bis 16 Gew.-%, vorzugsweise 8 bis 11 Gew.-% Mangan beträgt.

Ferner ist es diesbezüglich von Vorteil, wenn der Anteil an Chrom 13 bis 20 Gew.-% beträgt.

Weiterhin bevorzugt beträgt der Anteil an Kohlenstoff 0 bis 0,2 Gew.-%.

Für den Einsatz an Reibpaarungen, insbesondere für Verschleißschutzschichten an Bremskörpern 1 hat sich als besonders vorteilhaft erwiesen, wenn der hochlegierte austenitische Stahl der Matrix aus Folgendem besteht:
- 8 bis 11 Gew.-% Mangan
- 17 bis 20 Gew.-% Chrom,
- 0 bis 1 Gew.-% Mo,
- 0 bis 1 Gew.-% Nickel,
- 0 bis 1 Gew.-% Silizium,
- 0 bis 0,12 Gew.-% Kohlenstoff,
- 0 bis 0,06 Gew.-% Phosphor,
- 0 bis 0,03 Gew.-% Schwefel,
- 0,4 bis 0,65 Gew.-% Stickstoff,
- Rest Eisen.

Vorzugsweise beträgt der Anteil der Matrix 60 bis 85 Volumenprozent, vorzugsweise 60 bis 70 Volumenprozent bezogen auf die Oberflächenschicht 8, wobei der Rest durch die Hartstoffpartikel 9 gebildet wird.

Sowohl die Haftvermittlungsschicht 7 als auch die Verschleißschutzschicht 8 können durch Laserauftragsschweißen aufgebracht werden. Hierbei wird die aufgeschweißte Schicht unmittelbar stoffschlüssig mit dem darunterliegenden Material verbunden. Durch Laserauftragsschweißen wird, im Unterschied zu thermischen Spritzverfahren wie beispielsweise Flammspritzen, das darunterliegende Material etwas aufgeschmolzen, so dass sich ein besonders inniger Verbund ergibt. Eine Oberflächenvorbehandlung des Untergrunds wie bei thermischen Spitzverfahren, bei welchen sich lediglich eine mechanische Bindung einstellt, kann beim Laserauftragsschweißen entfallen. Das aufzuschweißende Material kann als Pulver, gegebenenfalls jedoch auch in Form eines Drahts oder einer starren Elektrode zugeführt werden.

Erprobungen haben gezeigt, dass der Verschleiß einer Bremsscheibe 1 der vorstehend erläuterten Art zwar erheblich niedriger ist als bei einfachen Graugussbremsscheiben. Gleichwohl ist es zweckmäßig und sinnvoll, feststellen zu können, zu welchem Zeitpunkt die Oberflächenschicht 8 auf dem Bremskörper 1 verschlissen ist und ein Austausch des Bremskörpers 1 angezeigt ist.

Der vorstehend erläuterte Schichtaufbau vermeidet magnetische Schichtmaterialien, so dass eine Schichtdickenmessung zerstörungsfrei mit Hilfe eines herkömmlichen magnetinduktiven Schichtdickenmessgeräts durchgeführt werden kann. Dazu kann beispielsweise nach der ersten Beschichtungslage eine Schichtdicke ermittelt werden kann. Nach dem Aufbringen der zweiten Beschichtungslage, d.h. Oberflächenschicht 8 bzw. Verschleißschutzschicht, wird die Schichtdicke erneut gemessen, so dass zugeordnet werden kann, wie dick die Oberflächenschicht 8 bzw. Verschleißschutzschicht nach einem anschließenden Schleifprozess ist.

Bei der Herstellung der des Bremskörpers 1 wird zunächst der Grundkörper 2 aus Grauguss oder ferritischem Stahl bereitgestellt.

Danach erfolgt die Aufbringung der Haftvermittlungsschicht 7 auf den Grundkörper 2 durch ein thermisches Auftragsverfahren, beispielsweise Laserauftragsschweißen, vorzugsweise beschränkt auf den Bereich des Reibflächenabschnitts 6.

Für die Haftvermittlungsschicht 7 wird vorzugsweise eine Schichtdicke von 60 bis 100 µm gewählt.

Die Haftvermittlungsschicht 7 weist einen hochlegierten austenitischen Stahl auf. Vorzugsweise besteht diese zu 100 % aus einem solchen hochlegierten austenitischen Stahl, so dass in diesen keine Hartstoffpartikel 9 eingeschlossen sind. Insbesondere kann die Haftvermittlungsschicht 7 ebenfalls aus einem manganhaltigen Stahl mit geringem Nickelgehalt hergestellt sein. Für die Haftvermittlungsschicht 7 können vor allem die oben für die Matrix der Oberflächenschicht 8 genannten Stähle zum Einsatz kommen. Für die Haftvermittlungsschicht 7 kann dabei eine andere Zusammensetzung als für die Matrix der Oberflächenschicht 8 verwendet werden. Es ist jedoch auch möglich, an einem Grundkörper 2 eine Haftvermittlungsschicht 7 aus einem Stahl zu verwenden, welcher gleichermaßen als Matrix für die Oberflächenschicht 8 an dem Grundkörper 2 dient.

Optional können Farbpigmente 10 in die Haftvermittlungsschicht 7 während deren Aufbringung auf den Grundkörper 2 eingebracht werden. Die Farbpigmente 10 können hierzu dem aufzuschweißenden Werkstoff, der beispielsweise pulverförmig sein kann, beigemengt werden.

Alternativ oder ergänzend können Farbpigmente 10 nach der Aufbringung der Haftvermittlungsschicht 7 und vor Aufbringung der Oberflächenschicht 8 auf die Haftvermittlungsschicht 7 aufgebracht werden.

Über solche Farbpigmente 10 kann eine Verschleißgrenze zusätzlich visuell erkannt werden.

Anschließend erfolgt das Aufbringen der Oberflächenschicht 8 auf die Haftvermittlungsschicht 7, gegebenenfalls unter Einschluss der Farbpigmente 10, zur Bereitstellung einer Reibfläche 6a bzw. 6b an dem Reibungsabschnitt 6 durch ein thermisches Auftragsverfahren, beispielsweise Laserauftragsschweißen.

Abschließend kann die Oberfläche der Reibfläche 6a bzw. 6b geschliffen werden.

Die Oberflächenschicht 8 bzw. Verschleißschutzschicht weist im Zustand nach dem Schleifen und vor Erstgebrauch des betreffenden Bauteils vorzugsweise eine Schichtdicke von 60 bis 420 µm auf.

In Abwandlung des vorstehend erläuterten Ausführungsbeispiels ist es ferner möglich, die Haftvermittlungsschicht 7 wegzulassen und die Oberflächenschicht 8 unmittelbar auf den Grundkörper 2 aufzubringen.

Das vorstehend erläuterte Ausführungsbeispiel ist zum Zweck der Veranschaulichung auf einen Grundkörper 2 bezogen, welcher als Bremskörper 1, insbesondere Bremsscheibe dargestellt ist. Wie bereits oben erwähnt, kann der Grundkörper beispielsweise auch eine Bremstrommel einer Trommelbremse sein. Überdies lässt sich die vorstehend in diesem Kontext beispielhaft erläuterte Oberflächenschicht 8 auch an Grundkörpern aus Grauguss oder ferritischem Stahl vorsehen, welche anderen Einsatzzwecken dienen.

Es ist daher zu betonen, dass das erfindungsgemäße Prinzip vorliegend nicht auf den Bereich von Kraftfahrzeugbremsen beschränkt ist, sondern überall dort eingesetzt werden kann, wo an einem Grundkörper 2 aus Grauguss oder ferritischem Stahl eine Oberflächenschicht 8 zur Verbesserung des Verschleißschutzes sowie des Korrosionsschutzes benötigt wird.

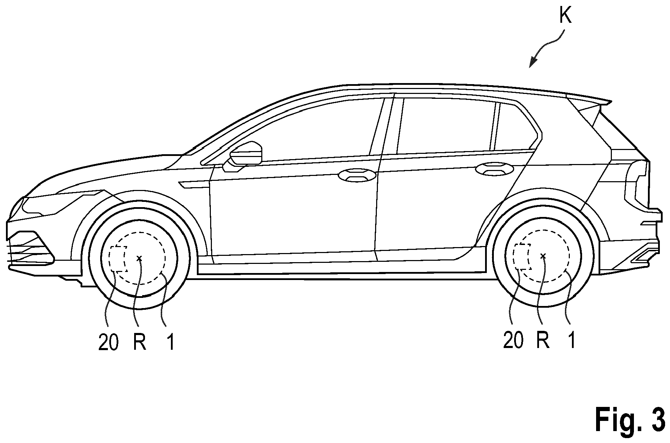

Ein zweites Ausführungsbeispiel zur Veranschaulichung der Erfindung soll nachfolgend anhand der Fig. 3 bis 6 erläutert werden. Fig. 3 zeigt ein Kraftfahrzeug K, welches mit erfindungsgemäßen Bremskörpern 1 ausgestattet ist. Die Bremskörper 1 sind beispielhaft als Bremsscheiben ausgebildet und um eine Rotationsachse R drehbar an einem nicht näher dargestellten Radträger montiert.

Bremssättel 20 enthalten jeweils zustellbare Bremsbeläge (nicht dargestellt), für die der Bremskörper 1 eine oder mehrere Reibflächen ausbildet. Wenn die Bremsbeläge gegen die Reibflächen des Bremskörpers 1 gepresst werden, kann das Kraftfahrzeug K abgebremst werden.

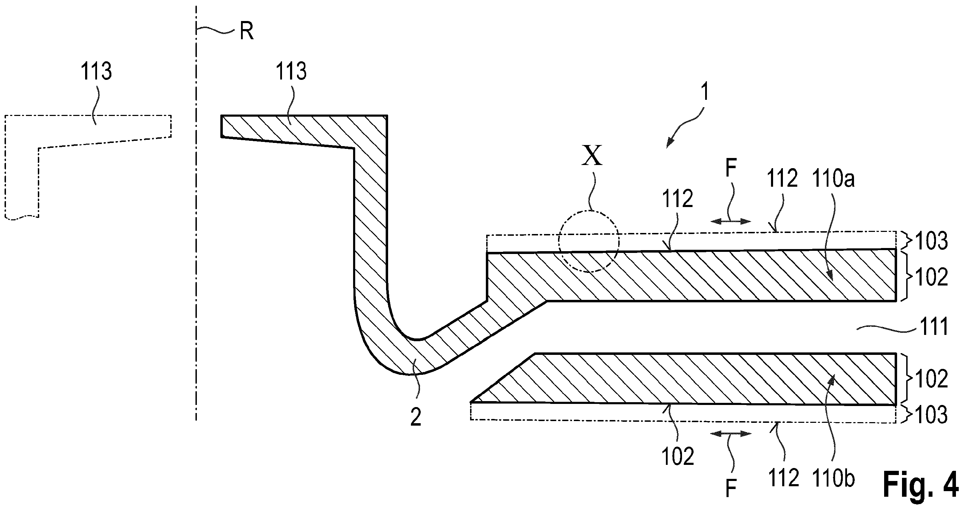

In Fig. 4 ist ersichtlich, dass der Bremskörper 1 des zweiten Ausführungsbeispiel als innenseitig belüftete Bremsscheibe ausgebildet sein kann, welche zwei Reibringe 110a und 110b aufweist. Abweichend vom Ausführungsbeispiel ist auch eine Bremsscheibe mit nur einem Reibring möglich. Zwischen den Reibringen 110a, 110b kann ein Lüftungszwischenraum 111 vorgesehen sein. Etwaige Abstandsrippen zwischen den Reibringen 10a, 10b sind nicht dargestellt. Jeder Reibring 10a, 10b kann einen flächigen Abschnitt 102 eines Grundkörpers 2 mit einer Flächenseite 102a bzw. 102b aufweisen. Jede Flächenseite 102a, 102b weist eine Flächenerstreckung F auf und ist mit einer Beschichtung 103 versehen. Durch die Beschichtung 103 wird jeweils eine beim Bremsen wirksame Reibfläche 112 ausgebildet.

Im zweiten Ausführungsbeispiel erstreckt sich die Beschichtung 103 jeweils über die gesamte Flächenseite 102a bzw. 102b des flächigen Abschnitts 102 des Grundkörpers 2. Abweichend davon ist es auch denkbar, dass die Beschichtung 103 lediglich auf dem Bereich der Flächenseiten 102a, 102b aufgebracht ist, der von den Bremsbelägen überstrichen wird.

Mit 113 ist eine Nabe des Bremskörpers 1 beziffert, die zur Montage des Bremskörpers 1 an einem nicht dargestellten Radträger dient.

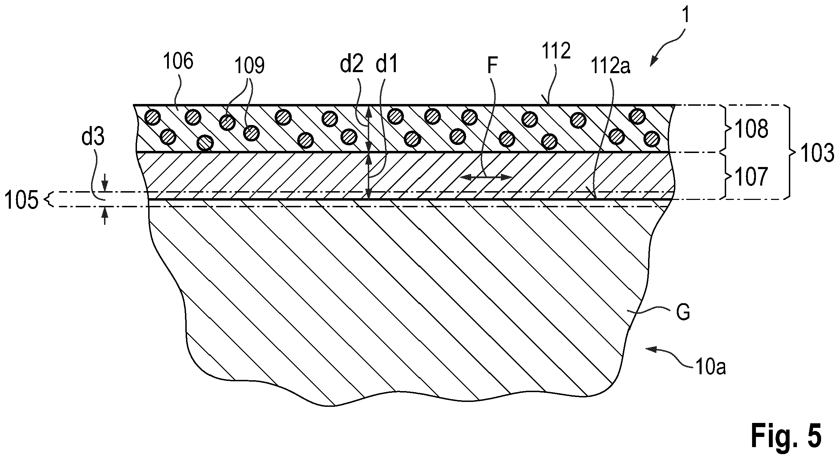

Fig. 5 zeigt den Aufbau der Beschichtung 103 im Detail. Die Beschichtung 103 kann dementsprechend aus einer ersten Aufbauschicht 107 und einer zweiten Aufbauschicht 108 besteht.

Die erste Aufbauschicht 107 ist unmittelbar auf den Grundkörper 2 aufgebracht, grenzt also unmittelbar an diesen an. Die zweite Aufbauschicht 108 ist wiederum auf die erste Aufbauschicht 107 aufgebracht und bildet vorliegend die Oberflächenschicht im zweiten Ausführungsbeispiel.

Hierbei ist kenntlich gemacht, dass die erste Aufbauschicht 107, senkrecht zur Flächenerstreckung F der Flächenseite 102a eine Dicke d1 aufweist. Die Dicke d1 liegt bevorzugt in einem Bereich von 40 µm bis 120 µm. Besonders bevorzugt weist die erste Aufbauschicht 107 eine Dicke d1 auf, welche in einem Bereich von 60 µm bis 100 µm liegt.

Die zweite Aufbauschicht 108 hingegen weist eine Dicke d2 auf, welche vorzugsweise in einem Bereich von 60 µm bis 420 µm liegt. Besonders bevorzugt liegt die Dicke d2 in einem Bereich von 80 µm bis 400 µm.

Durch diese Schichtdickenbereiche können durch die erste Aufbauschicht 107 der Zweck einer Korrosionsschutzwirkung sowie der Zweck Hemmung von Anrissen aus der zweiten Aufbauschicht 108 optimal erfüllt werden.

Der angegebene Dickenbereich der zweiten Aufbauschicht 108 erfüllt die Anforderung einer hohen Verschleißbeständigkeit, wodurch Partikelemissionen durch Reibungsverschleiß deutlich verringert werden können.

Ferner ist in Fig. 5 eine Anbindungszone 105 angedeutet, welche in einem Übergang zwischen dem Grundkörper 102 und der angrenzenden ersten Aufbauschicht 107 liegt. Die Anbindungszone 105 ist dadurch gekennzeichnet, dass hier eine bestimmte Mischung zwischen dem Material des Grundkörpers 102 und dem Material der ersten Aufbauschicht 107 stattfindet. Die Anbindungszone 105 weist eine Dicke d3 senkrecht zur Flächenerstreckung F auf, die nur sehr dünn ist und unter 10 µm liegt. Vorzugsweise weist die Anbindungszone 105 eine Dicke d3 von weniger als 5 µm auf.

Es hat sich gezeigt, dass eine derart geringe Dicke der Anbindungszone 105 eine Kornbildung und eine Aufhärtung der ersten Aufbauschicht 107 einerseits verhindert werden können und andererseits eine gute Haftung der ersten Aufbauschicht 107 auf dem Grundkörper G erzielbar ist. Es können Haftzugfestigkeiten von weit über 50 MPa erreicht werden. Hierdurch können die Grundvoraussetzungen für eine hohe Verschleißbeständigkeit und für einen hohen Korrosionsschutz bereitgestellt werden.

Im Folgenden soll nun näher auf die verwendeten Materialien eingegangen werden. So ist der Grundkörper 2 aus Grauguss oder auch aus einem ferritischen Stahl hergestellt. Er kann mitsamt der Nabe 113 (vgl. Fig. 4) beispielsweise mit einem üblichen Gießverfahren hergestellt werden.

Die erste Aufbauschicht 107 besteht aus einem hochlegierten austenitischen Stahl, insbesondere einem duktilen und zähen Chrom-Mangan-Stahl, wie im Rahmen des ersten Ausführungsbeispiels für die Haftschicht 7 beschrieben.

Die zweite Aufbauschicht 108 besteht aus einem Verbund aus einer Matrix 106 aus einem hochlegierten austenitischen Stahl mit eingelagerten Hartstoffpartikeln 10 wie im Rahmen des ersten Ausführungsbeispiels für die Oberflächenschicht 8 beschrieben.

Die eingelagerten Hartstoffpartikel 109 können Wolframkarbidpartikel sein.

Es hat sich als vorteilhaft erwiesen, wenn in der zweiten Aufbauschicht 108 das Volumen eingelagerter Wolframkarbidpartikel oder anderer Hartstoffpartikel 109 zum Volumen der Matrix 106 einen Anteil in einem Bereich von 20% bis 40% liegt. Vorzugsweise liegt der Anteil des Volumens der eingelagerten Hartstoffpartikel 109 in einem Bereich von 25% bis 35% des Volumens der Matrix 106.

Durch eine derartige Volumenverteilung kann einerseits eine verstärkte Rissneigung in der zweiten Aufbauschicht 108 verhindert und andererseits der Verschleiß der zweiten Aufbauschicht 108 bei guten Reibwerten begrenzt werden.

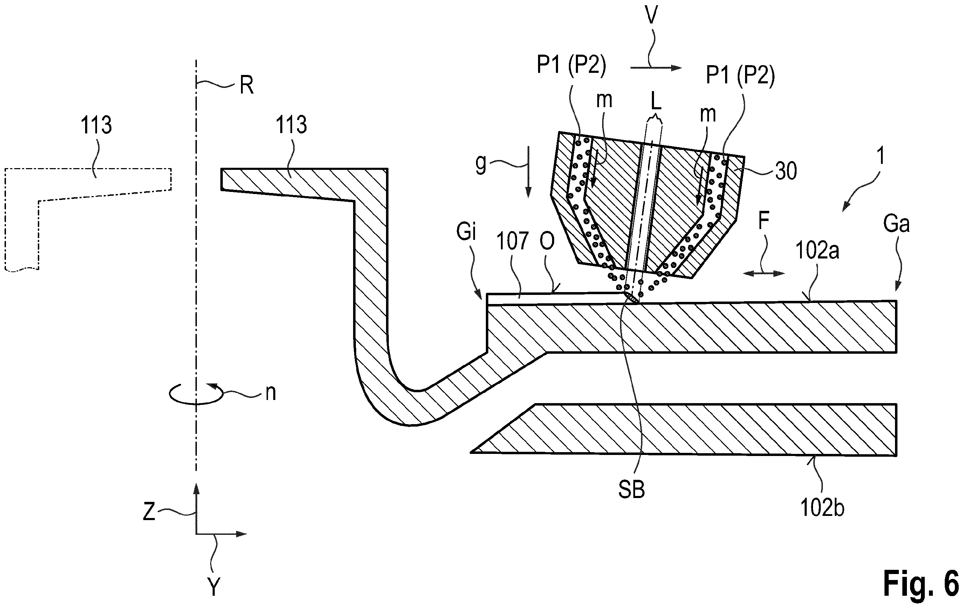

Fig. 6 veranschaulicht einen ersten Prozessschritt der Herstellung der Beschichtung 103. Zunächst wird mit Hilfe einer nicht näher dargestellten Vorrichtung der Grundkörper 2 des Bremskörpers 1 mit seiner Rotationsachse R vertikal, also in einer Hochrichtung Z ausgerichtet, derart, dass die Flächenseite 102a mit ihrer Flächenerstreckung F parallel zu einer Horizontalrichtung Y ausgerichtet ist.

Der Grundkörper 2, vorliegend die unbeschichtete Bremsscheibe, wurde vorher nach einem üblichen Serienfertigungsprozess hergestellt.

In etwa parallel zur Rotationsachse R ist ein Beschichtungswerkzeug 30 angeordnet. Das Beschichtungswerkzeug 3 ist einachsig orthogonal bzw. radial zur Rotationsachse R und parallel zur Horizontalrichtung Y bewegbar. Es weist mindestens eine Laseroptik zur Erzeugung eines Laserstrahls L und eine Düse für den Ausstoß eines ersten, pulverförmigen Beschichtungsmaterials P1 und/oder eines zweiten, pulverförmigen Beschichtungsmaterials P2 auf. An das Beschichtungswerkzeug 30 können mindestens eine Laserquelle und mindestens ein Pulverförderer angeschlossen sein.

Anschließend wird der Grundkörper 102 in Rotation versetzt, so dass er sich mit einer bestimmten Drehzahl n um die Rotationsachse R dreht. Der Beschichtungsvorgang des Grundkörpers 102 beginnt an einer radialen Innenposition Gi und wird durch eine radiale Zustellbewegung V in Richtung einer radialen Außenposition Ga des Grundkörpers 102 fortgesetzt.

Gleichzeitig mit der Erzeugung des Laserstrahls L wird der erwähnte Pulverförderer derart in Gang gesetzt, dass das erste pulverförmige Beschichtungsmaterial P1 mit einem Pulvermassenstrom m gefördert wird, der in einem Bereich von etwa 15 g/min bis etwa 220 g/min, vorzugsweise im Bereich von etwa 20 g/min bis etwa 200 g/min liegt. Das erste pulverförmige Beschichtungsmaterial P1 kann aus Pulverkörnern mit sphärischer Gestalt bestehen und entspricht der herzustellenden ersten Aufbauschicht 107.

Je nach der momentanen Position des Beschichtungswerkzeugs 30 wird die Drehzahl n des Grundkörpers 2 angepasst, um eine über die gesamte zu beschichtende Fläche der Flächenseite 102a konstante Dicke der Aufbauschicht B1 zu erzielen.

Beim Beschichtungsverfahren wird eine Strahlungsintensität S des Laserstrahls L (vgl. Fig. 6) derart eingestellt, dass diese in einem Bereich von etwa 500 W/m² bis etwa 1500 W/mm², vorzugsweise in einem Bereich von etwa 600 W/mm² bis etwa 1400 W/mm² liegt. Hierdurch wird sichergestellt, dass eine Überhitzung der jeweils aufzubringenden Aufbauschicht 107 bzw. 108 nicht stattfindet.

Bei dem dargestellten Beschichtungsverfahren wird der Beschichtungswerkstoff, also das pulverförmige Beschichtungsmaterial P1 bzw. P2 aufgeschmolzen. Dafür wird das pulverförmige Beschichtungsmaterial P1 bzw. P2 durch das Beschichtungswerkzeug 3 gezielt dem auf den Grundkörper 102 auftreffenden Laserstrahl L, insbesondere einem Laserspot zugeführt. Dort wird das pulverförmige Beschichtungsmaterial P1 bzw. P2 aufgeschmolzen und bildet ein Schmelzbad SB aus.

Der Grundkörper 102 hingegen bildet selbst kein Schmelzbad aus, sondern wird nur lokal bis auf eine Temperatur kurz unter seiner Schmelztemperatur erwärmt. Es kommt daher nicht zu einer Einbringung ungeschmolzener Körner des pulverförmigen Beschichtungsmaterials P1 bzw. P2 in eine Schmelze des Grundkörpers 102, sondern zur Abscheidung eines Schmelzbades SB aus den Körnern des pulverförmigen Beschichtungsmaterials P1 bzw. P2. An der unmittelbaren Grenzfläche zwischen dem schmelzflüssigen Beschichtungsmaterial P1 und der lokal stark erwärmten Oberfläche des Substrats, hier dem Grundkörper 102 kommt es durch einen Diffusionsprozess zu einer sehr guten Anbindung des Beschichtungsmaterials P1 an das Substrat bzw. den Grundkörper 102, ohne dass eine erhöhte Aufmischung der beteiligten Materialien stattfindet.

Da das pulverförmige Beschichtungsmaterial P1 bzw. P2 in Richtung oder in etwa in Richtung der Erdbeschleunigung g in den Laserstrahl L gebracht wird, kann dieses lange im Laserstrahl L verbleiben und es kann eine gute Aufschmelzung stattfinden.

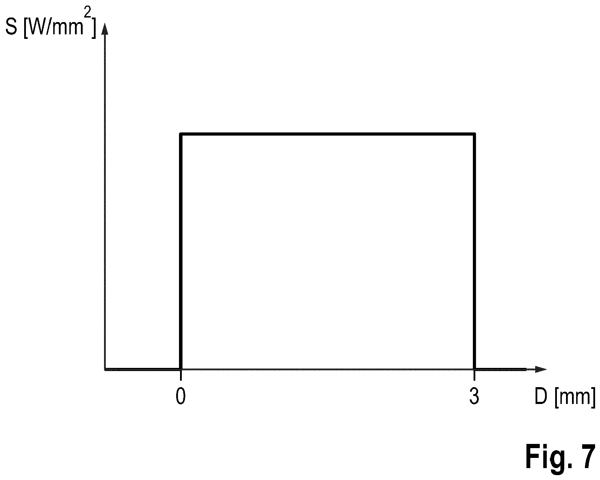

Fig. 7 zeigt eine Strahlungsintensität S des Laserstrahls L über einem Durchmesser D eines Laserspots, der sich auf der jeweils zu beschichtenden Oberfläche ausbildet.

Im zweiten Ausführungsbeispiel wird bevorzugt ein Laserspot mit einem Durchmesser D von etwa 3 mm ausgebildet. Es ist ersichtlich, dass die Laserintensität S über den gesamten Durchmesser D des Laserspots nahezu konstant bleibt. Die Strahlungsintensität S des Laserstrahls L kann ein sogenanntes Top-Hat-Profil (oder auch Rechteckprofil) ausbilden.

Während der Beschichtung kann das Beschichtungswerkzeug 30 mit einer Zustellbewegung V radial nach außen bewegt werden, die eine Geschwindigkeit von mehr als 90 m/min, vorzugsweise von mehr als 100 m/min bis maximale 250 m/min aufweist.

Ferner können eine die Zustellbewegung V des Beschichtungswerkzeugs 30 und eine Umdrehungsgeschwindigkeit des Bremskörpers 1 derart aufeinander abgestimmt werden, dass sich im Lauf einer vollständigen Umdrehung des Bremskörpers 1 um 360 Grad eine Überlappung von einer im Lauf der Umdrehung aufgebrachten Beschichtungsspur zu einer zuvor aufgebrachten Beschichtungsspur ergibt, die in einem Bereich von 85% bis 95%, vorzugsweise bei etwa 90% liegt. Hierdurch ergibt sich insgesamt pro Aufbauschicht 107, 108 ein schneckenartiger Verlauf der aufgebrachten Schichtspuren.

Bevorzugt wird die radiale Zustellbewegung V auf etwa 0,3 mm pro Umdrehung eingestellt.

Nachdem die erste Aufbauschicht 107 in gewünschter Weise auf den Grundkörper 102 aufgebracht worden ist, erfolgt die Auftragung der zweiten Aufbauschicht 108 auf eine Oberfläche der ersten Aufbauschicht 107 in entsprechender Weise.

Das Beschichtungswerkzeug 30 wird dabei wiederum radial von innen nach außen zugestellt. Allerdings wird zur Aufbringung der zweiten Aufbauschicht 108 nunmehr das zweite pulverförmige Beschichtungsmaterial P2 dem Laserstrahl L zugeführt. Auch das zweite pulverförmige Beschichtungsmaterial liegt bevorzugt in Körnern, vorzugsweise mit sphärischer Gestalt, vor. Das Material besteht, wie bereits erwähnt aus einem Material entsprechend der oben erläuterten Oberflächenschicht 8.

Abweichend von den Wolframkarbidpartikeln ist es auch möglich, keramische, metallische Werkstoffe oder Verbundwerkstoffe aus oxidkeramischen, karbidischen oder boridischen Partikeln in einer hochlegierten austenitischen Eisenlegierungsmatrix 106 einzusetzen. Beispielsweise sind Chromkarbide, Titankarbide oder auch Niobkarbide verwendbar.

Die Erfindung wurde vorstehend anhand von Ausführungsbeispielen und weiteren Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und Abwandlungen beschränkt, sondern umfasst alle durch die Patentansprüche definierten Ausgestaltungen.

### Bezugszeichenliste

- 1: Bremskörper
- 2: Grundkörper
- 3: Befestigungsabschnitt
- 4: Boden
- 5: Durchgangsöffnung
- 6: Reibflächenabschnitt
- 6a: Reibfläche
- 6b: Reibfläche
- 7: Haftvermittlungsschicht
- 8: Verschleißschutzschicht
- 9: Hartstoffpartikel
- 20: Bremssattel
- 30: Beschichtungswerkzeug
- 102: Grundkörper
- 103: Beschichtung
- 105: Anbindungszone
- 106: Matrix
- 107: erste Aufbauschicht
- 108: zweite Aufbauschicht (Oberflächenschicht)
- 109: Hartstoffpartikel
- 110a, b: Reibring
- 111: Lüftungszwischenraum
- 112: Reibfläche
- 113: Nabe
- D: Durchmesser
- d1: Dicke
- d2: Dicke
- d3: Dicke
- F: Flächenerstreckung
- Gi: radiale Innenposition
- Ga: radiale Außenposition
- g: Erdbeschleunigung
- K: Kraftfahrzeug
- L: Laserstrahl
- m: Pulvermassenstrom
- n: Drehzahl
- P1: erstes pulverförmige Beschichtungsmaterial
- P2: zweites pulverförmige Beschichtungsmaterial
- R: Rotationsachse
- S: Strahlungsintensität
- SB: Schmelzbad
- V: Zustellbewegung
- Y: Horizontalrichtung
- Z: Hochrichtung

## Patentansprüche

1. Oberflächenschicht (8) (8) für einen Grundkörper aus Grauguss oder einem ferritischen Stahl, welche durch ein thermisches Auftragsverfahren auf den Grundkörper (2, 102) aufgebracht oder aufbringbar ist, wobei die Oberflächenschicht (8) eine Matrix (106) aus einem hochlegierten, austenitischen Stahl und in diese Matrix (106) eingebettete Hartstoffpartikel (9, 109) aufweist,
**dadurch gekennzeichnet, dass**
der hochlegierte austenitische Stahl der Matrix (106) besteht aus:
- mindestens 8 Gew.-% Mangan,
- mindestens 13 Gew.-% Chrom,
- maximal 5 Gew.-% weitere Begleitelemente außer Eisen, wobei ein Anteil von Nickel auf maximal 1,5 Gew.-% beschränkt ist, und
- Rest Eisen.

2. Oberflächenschicht (8) für einen Grundkörper (2, 102) aus Grauguss oder einem ferritischen Stahl nach Anspruch 1, **dadurch gekennzeichnet, dass** der Anteil an Mangan 8 bis 16 Gew.-% beträgt.

3. Oberflächenschicht (8) für einen Grundkörper (2, 102) aus Grauguss oder einem ferritischen Stahl nach Anspruch 1 oder 2, **dadurch gekennzeichnet, dass** der Anteil an Chrom 13 bis 20 Gew.-% beträgt.

4. Oberflächenschicht (8) für einen Grundkörper (2, 102) aus Grauguss oder einem ferritischen Stahl nach einem der Ansprüche 1 bis 3, **dadurch gekennzeichnet, dass** der Anteil an Nickel 0 bis 1,1 Gew.-% beträgt.

5. Oberflächenschicht (8) für einen Grundkörper (2, 102) aus Grauguss oder einem ferritischen Stahl nach einem der Ansprüche 1 bis 4, **dadurch gekennzeichnet, dass** der Anteil an Kohlenstoff 0 bis 0,2 Gew.-% beträgt.

6. Oberflächenschicht (8) für einen Grundkörper (2, 102) aus Grauguss oder einem ferritischen Stahl nach einem der Ansprüche 1 bis 5, **dadurch gekennzeichnet, dass** der hochlegierte austenitische Stahl der Matrix (106) besteht aus:
- 8 bis 11 Gew.-% Mangan
- 17 bis 20 Gew.-% Chrom,
- 0 bis 1 Gew.-% Mo,
- 0 bis 1 Gew.-% Nickel,
- 0 bis 1 Gew.-% Silizium,
- 0 bis 0,12 Gew.-% Kohlenstoff,
- 0 bis 0,06 Gew.-% Phosphor,
- 0 bis 0,03 Gew.-% Schwefel,
- 0,4 bis 0,65 Gew.-% Stickstoff,
- Rest Eisen.

7. Oberflächenschicht (8) für einen Grundkörper (2, 102) aus Grauguss oder einem ferritischen Stahl einem der Ansprüche 1 bis 6, **dadurch gekennzeichnet, dass** die Hartstoffpartikel (9, 109) ausgewählt sind aus mindestens einem von Karbiden, Nitriden, Oxiden und Boriden und eine Korngröße von 10 bis 60 µm aufweisen.

8. Oberflächenschicht (8) für einen Grundkörper (2, 102) aus Grauguss oder einem ferritischen Stahl nach einem der Ansprüche 1 bis 7, **dadurch gekennzeichnet, dass** die Hartstoffpartikel (9, 109) Partikel aus Wolframkarbid umfassen.

9. Oberflächenschicht (8) für einen Grundkörper (2, 102) aus Grauguss oder einem ferritischen Stahl nach einem der Ansprüche 1 bis 8, **dadurch gekennzeichnet, dass** der Anteil der Matrix (106) an der Oberflächenschicht (8) 60 bis 85 Volumenprozent, vorzugsweise 60 bis 70 Volumenprozent beträgt und der Rest der Oberflächenschicht (8) durch die Hartstoffpartikel (9, 109) gebildet wird.

10. Grundkörper (2, 102) aus Grauguss oder ferritischem Stahl mit einer durch ein thermisches Auftragsverfahren aufgebrachten Oberflächenschicht (8) gemäß einem der vorgenannten Ansprüche als Verschleißschutzschicht.

11. Grundkörper (2, 102) nach Anspruch 10, **dadurch gekennzeichnet, dass** zwischen der Oberflächenschicht (8) und dem Werkstoff des Grundkörpers (2, 102) als Haftvermittlungsschicht (7) zwischen beiden eine Schicht angeordnet ist, welche zu 100 % aus einem hochlegierten austenitischen Stahl, insbesondere einem hochlegierten austenitischen Stahl mit den Bestandteilen der Matrix (106) aus Anspruch 1 besteht.

12. Grundkörper (2, 102) nach Anspruch 10 oder 11, **dadurch gekennzeichnet, dass** der Grundkörper (2, 102) ein Bremskörper (1), nämlich eine Bremsscheibe oder Bremstrommel für eine Reibungsbremse eines Kraftfahrzeugs ist, wobei die Bremsscheibe oder Bremstrommel umfasst:
einen Reibungsabschnitt (6) mit mindestens einer Reibfläche (6a, 6b) und einen Befestigungsabschnitt (3) zur radseitigen Befestigung am Kraftfahrzeug,
wobei der Reibungsabschnitt (6) und der Befestigungsabschnitt (7) an dem Grundkörper (2, 102) aus Grauguss oder ferritischem Stahl ausgebildet sind,
wobei als Reibfläche (6a, 6b) an dem Reibungsabschnitt (6) die Oberflächenschicht (8) als Verschleißschutzschicht thermisch aufgebracht ist, und
wobei zwischen der Oberflächenschicht (8) und dem Grundkörper (2, 102) die Haftvermittlungsschicht (7) angeordnet ist, über welche die Oberflächenschicht (8) an dem Grundkörper (2, 102) angebunden ist.

13. Grundkörper (2, 102) nach einem der Ansprüche 10 bis 12, **dadurch gekennzeichnet, dass** die Haftvermittlungsschicht (7) durch Laserauftragsschweißen auf den Grundkörper (2, 102) aufgebracht ist und/oder die Oberflächenschicht (8) durch Laserauftragsschweißen auf die Haftvermittlungsschicht (7) aufgebracht ist.

14. Grundkörper (2, 102) nach einem der Ansprüche 10 bis 13, **dadurch gekennzeichnet, dass** die Oberflächenschicht (8) eine Schichtdicken von 60 bis 420 µm aufweist und/oder die Haftvermittlungsschicht (7) eine Schichtdicke von 60 bis 100 µm aufweist.

15. Verfahren zur Herstellung eines Bremskörpers (1) für eine Reibungsbremse eines Kraftfahrzeugs, umfassend:
- Bereitstellen eines Grundkörpers (2, 102) aus Grauguss oder ferritischem Stahl, welcher sich über einen Reibungsabschnitt (6) und einen Befestigungsabschnitt (3, 113) zur radseitigen Befestigung am Kraftfahrzeug erstreckt,
- Aufbringen einer Haftvermittlungsschicht (7) aus einem hochlegierten austenitischen Stahl auf den Grundkörper (2, 102) durch ein thermisches Auftragsverfahren,
- Aufbringen einer Oberflächenschicht (8) gemäß einem der Ansprüche 1 bis 9 als Verschleißschutzschicht auf die Haftvermittlungsschicht (7) zur Bereitstellung einer Reibfläche (6a, 6b) an dem Reibungsabschnitt (6) durch ein thermisches Auftragsverfahren.

16. Verfahren nach Anspruch 15, **dadurch gekennzeichnet, dass** im Rahmen des thermischen Auftragsverfahrens eine Strahlungsintensität (S) eines Energiestrahls für das Aufbringen der Haftvermittlungsschicht (7) sowie das Aufbringen der Oberflächenschicht (8) in einem Bereich von 500 W/mm² bis 1.500 W/mm² gehalten wird, wobei das jeweilige Beschichtungsmaterial für die Haftvermittlungsschicht (7) und die Oberflächenschicht (8) in Form eines Pulvers mit einem Pulvermassenstrom in einem Bereich von 15 g/min bis 220 g/min zugeführt wird.

17. Verfahren nach Anspruch 15 oder 16, **dadurch gekennzeichnet, dass** für das Aufbringen der Haftvermittlungsschicht (/) sowie das Aufbringen der Oberflächenschicht (8) der Grundkörper (2, 102) um eine Achse gedreht wird und ein Beschichtungswerkzeug (30), welches den Energiestrahl und den Pulvermassenstrom zusteuert, eine Linearbewegung vollführt, derart aufeinander abgestimmt, dass sich im Lauf einer vollständigen Umdrehung des Bremskörpers (1) eine Überlappung von einer im Lauf der Umdrehung aufgebrachten Beschichtungsspur zu einer zuvor aufgebrachten Beschichtungsspur in einem Bereich von 85% bis 95% ergibt.
